# EUROPEAN PATENT APPLICATION

(11) **EP 2 835 289 A2**
(43) Date of publication of application: **11.02.2015**
(21) Application number: 14168636.0
(22) Date of filing: 16.05.2014
(51) Int. Cl.: B60S 1/08, B60S 1/16, H02K 5/22, H02K 7/116

(54) **Electric driver and gear cover assembly thereof**

(30) Priority: 09.08.2013 CN 201320486955 U
(71) Applicant: Bosch Automotive Products (Changsha) Co., Ltd, Changsha, Hunan 410100 (CN)
(72) Inventor: Cui, Guoqiang, 410100 Changsha Hunan (CN); Xu, Kaikai, 410100 Changsha Hunan (CN); Holzer, Thomas, 76307 Karlsbad (DE); Yang, Sulin, 410100 Changsha Hunan (CN); Koesters, Matthias, 410100 Changsha Hunan (CN)
(74) Representative: Bee, Joachim

(57) **Abstract**

An electric driver and a gear cover assembly thereof are disclosed, the gear cover assembly comprising a metal gear cover (1) which is formed with a cutout (6) therethrough, and an electric connector (2) which comprises an insulative main body (30) and a conductive terminal (50) carried by the insulative main body (30), the insulative main body (30) being fixed to the gear cover (1), and the electric connector (2) covering or extending through the cutout (6). The gear cover (1) according to the disclosure has high rigidity and strength.

## Description

### Technical Field

The disclosure relates to an electric driver and a gear cover assembly thereof.

### Background Art

A motor type electric driver, such as a wiper motor assembly of a wiper system for a windshield of a vehicle, is generally integrated with a gear mechanism for converting the high speed and low torque output of an electric motor into a low speed and high torque output. The gear mechanism generally comprises at least an input gear and an output gear. The gear mechanism is accommodated in a gear housing which is connected with a housing part of the electric motor. The gear housing is opened on one side which is closed by a gear cover. The main functions of the gear cover include closing the gear mechanism, sealing against water and dust, and providing electrical interface.

Gear covers in the prior art are generally formed of a plastic material by injection molding. The rigidity and strength of such plastic gear covers may be not enough for some applications.

### Summary of the Utility Model

An object of the disclosure is to provide an improved gear cover assembly for an electric driver for overcoming the defects existed in the prior art as described above.

For this end, according to an aspect of the disclosure, there provides a gear cover assembly for covering a gear mechanism of an electric driver, the gear cover assembly comprising a metal gear cover which is formed with a cutout therethrough, and an electric connector comprising an insulative main body and a conductive terminal carried by the insulative main body, the insulative main body being fixed to the gear cover, and the electric connector covering or extending through the cutout.

According to a preferred embodiment of the disclosure, the gear cover is formed by pressing and comprises a flat central body and locking tabs which cooperate with corresponding locking structures on a gear housing to lock the gear cover to the gear housing.

According to a preferred embodiment of the disclosure, the gear cover further comprises an outer slot surrounding the central body, the locking tabs extending from an outer vertical wall, which delimits the outer slot, towards the gear housing.

According to a preferred embodiment of the disclosure, the gear cover further comprises locating tabs extending from the outer vertical wall for locating the gear cover with respect to the gear housing, and each locking tab comprises a cut-through hole into which a corresponding locking structure in the form of a locking protrusion on the gear housing is to be engaged.

According to a preferred embodiment of the disclosure, the gear cover further comprises an inner slot between the central body and the outer slot, the inner slot facing away from the gear housing.

According to a preferred embodiment of the disclosure, the central body is formed with locating holes around the periphery of the cutout, and the insulative main body of the electric connector is formed with locating pins which are inserted through the locating holes respectively for locating the electric connector to the gear cover.

According to a preferred embodiment of the disclosure, the locating pins are formed with fixing features for fixing the electric connector to the gear cover.

According to a preferred embodiment of the disclosure, the gear cover assembly further comprises a sealing member sealing between the gear cover and the insulative main body of the electric connector around the cutout and the locating holes.

According to a preferred embodiment of the disclosure, the electric connector comprises a ground plate electrically connected to the gear cover.

According to another aspect of the disclosure, there provides an electric driver comprising an electric motor, a gear mechanism for outputting the motion of the electric motor, and a gear cover assembly described above which covers the gear mechanism, the electric connector forming a part of a parking electric circuit for the electric motor.

According to the disclosure, a gear cover assembly for an electric driver comprises a metal gear cover which has higher rigidity and strength than a plastic one. Meanwhile, the metal gear cover may additionally functions as a ground part.

### Brief Description of the Drawings

Figure 1 is a schematic front perspective view of a gear cover assembly according to a preferred embodiment of the disclosure;
Figure 2 is a schematic back perspective view of the gear cover assembly;
Figure 3 is a schematic front perspective view of a stamped metal gear cover of the gear cover assembly;
Figure 4 is a schematic back perspective view of a stamped metal gear cover of the gear cover assembly;
Figure 5 is a schematic front perspective view of an electric connector of the gear cover assembly;
Figure 6 is another schematic front perspective view of the electric connector taken in an angle of view different from that of Figure 5;
Figure 7 is a schematic perspective view of a spring contact of the electric connector; and
Figure 8 is a schematic perspective view of a ground plate of the electric connector.

### Detailed Description of Preferred Embodiments

Now some preferred embodiments of the disclosure will be described with reference to the drawings.

The disclosure generally relates to a gear cover assembly for an electric driver, especially used in a wiper system of a vehicle. Thus, a wiper motor assembly for a vehicle wiper system will described as an example, but it is appreciated that the disclosure is also applicable in other fields.

The wiper motor assembly comprises an electric motor and a gear mechanism integrated with the electric motor for converting the high speed and low torque output of the an electric motor into a low speed and high torque output which is used to drive a wiper system linkage. The gear mechanism comprises at least an input gear, for example, a worm, and an output gear, for example, a worm gear. The output gear may mesh with the input gear directly, or indirectly via one or more intermediate gears when necessary.

The gear mechanism is accommodated in a gear housing which is coupled to or formed integrally with a housing part of the electric motor. The gear housing is opened on one side for mounting and removing the gear mechanism. The output gear has a first side that faces outwards through the open side of the gear housing and a second opposite side which faces away from the open side. The output gear is formed with an output shaft which extends perpendicularly from the second side and passes through the gear housing for driving the wiper system linkage. A conductive contact plate of a parking system of the wiper system is carried by the first side of the output gear. The parking system of the wiper system is known in the art for moving the wiper blades back to their parking or home positions after a wiping operation of the wiper system is ended.

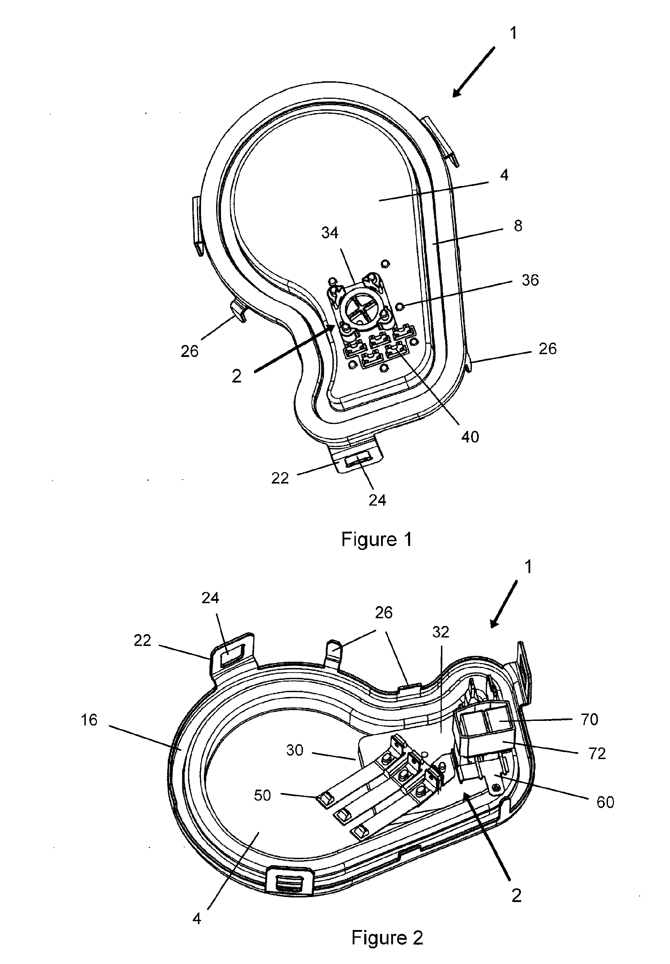

The open side of the gear housing is closed by a gear cover assembly according to a preferred embodiment of the disclosure. As shown in Figures 1 and 2, the gear cover assembly mainly comprises a gear cover 1 to be assembled to the gear housing and an electric connector 2 carried by the gear cover 1.

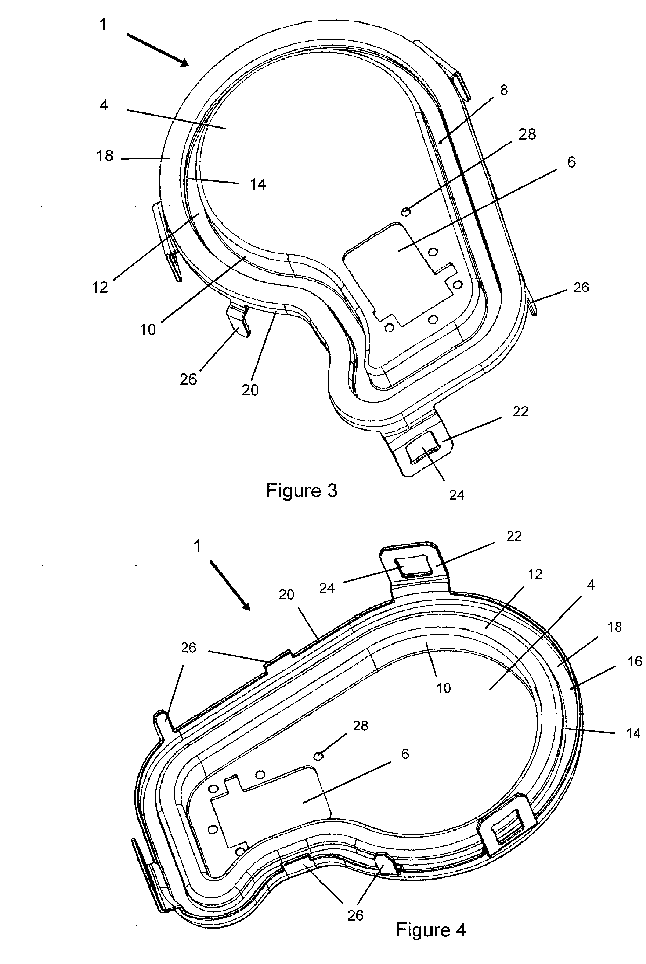

According to a basic concept of the disclosure, the gear cover 1 is made of a stamped sheet metal. As can be seen from Figures 1 to 4, the gear cover 1 has a flat central body 4 with a cutout 6 which is inserted through by the electric connector 2 to mount the electric connector 2 to the gear cover 1. The outer periphery of the central body 4 is surrounded by a first or inner slot 8 which is delimited by a first vertical wall 10 extending downwards from the outer periphery of the central body 4, a bottom wall 12 extending outwards from the bottom edge of the outer periphery of the central body 4, and a second vertical wall 14 extending upwards from the outer edge of the bottom wall 12. The inner slot 8 is preferably continuous, but it may be alternatively not continuous. A second or outer slot 16 is formed surrounding the first slot 8 and delimited by the second vertical wall 14, a top wall 18 extending outwards from the upper edge of the second vertical wall 14, and a third vertical wall 20 extending downwards from the outer edge of the top wall 18. The outer slot 16 is preferably continuous, but it may be alternatively not continuous.

The first, second and third vertical walls 10, 14 and 20 are substantially parallel with each other, perpendicular to the bottom wall 12. The second and third vertical walls 14 and 20 may each have a height smaller than that of the first vertical wall 10. In the state that the gear cover 1 is assembled to the gear housing, the first slot 8 faces away from the gear housing while the second slot 16 faces towards the gear housing. The upper edge of the gear housing along its open side is inserted into the second slot 16. A sealing member may be disposed in the second slot 16 to form a tight seal between the gear housing and the gear cover 1.

Along the lower edge of the third vertical wall 20, there are formed with at least two (three in the illustrated embodiment) locking tabs 22 for locking the gear cover 1 to the gear housing. For example, each locking tab 22 is formed with a cut-through hole 24 into which a corresponding locking protrusion on the gear housing is to be engaged. The locking tabs 22 are disposed with intervals therebetween along the lower edge of the second slot 16, and extend downwards, substantially perpendicular to the central body 4. For facilitating the engagement of the protrusions into the cut-through holes 24, each locking tab 22 may be offset outwards from the third vertical wall 20 by a small distance, and is flexible outwards.

Further, several locating tabs 26 are formed along the lower edge of the third vertical wall 20 for facilitating the locating of the gear cover 1 with respect to the gear housing.

Further, locating holes 28 are formed through the gear cover 1 along the periphery of the cutout 6 for facilitating the locating of the electric connector 2 with respect to the gear cover 1, as described later.

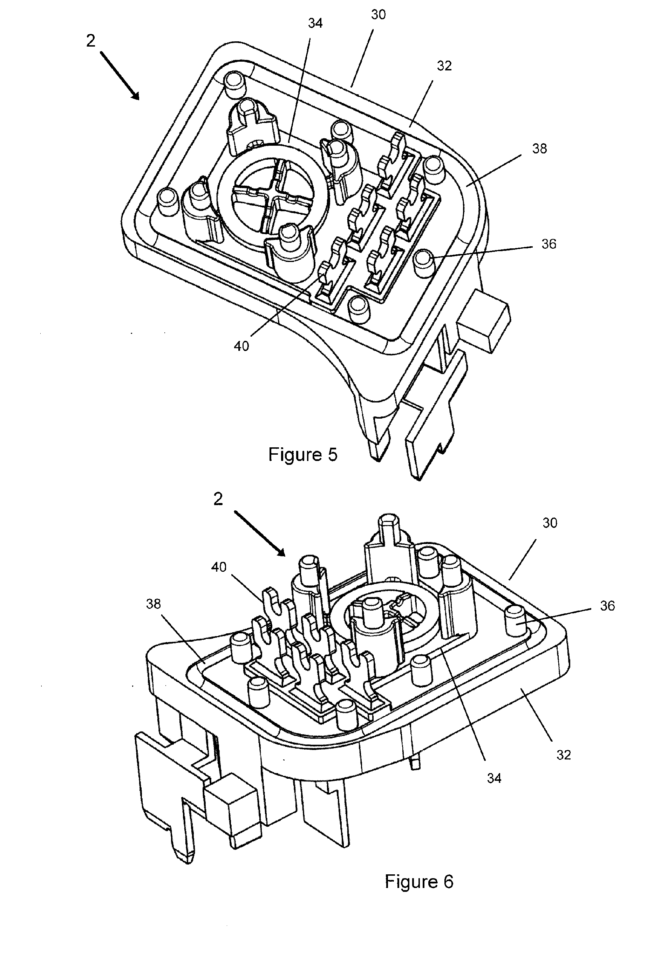

As can be seen from Figures 1 and 2, and with reference to Figures 5 and 6, the electric connector 2 comprises an insulative main body 30 and a portion of a parking electric circuit of a parking system of the wiper system carried by the main body 30. The main body 30 is formed of a plastic material by injection molding, and comprises a base portion 32 and an upper portion 34 formed on the base portion 32. The upper portion 34 is inserted through the cutout 6 of the gear cover 1 to be exposed outside. The upper portion 34 and the cutout 6 have shapes complementary with each other.

Locating pins 36 are formed on the upper surface of the base portion 32 at locations corresponding to the locating holes 28 of the gear cover 1. When the upper portion 34 is inserted through the cutout 6, the locating pins 36 are inserted through the locating holes 28 respectively for locating the electric connector 2 to the gear cover 1 precisely. The locating pins 36 may have fixing structures (not shown). For example, each locating pin 36 may be provided with a barb, a hook or the like for fixing the electric connector 2 to the gear cover 1. Alternatively, a portion of the locating pin 36 which is inserted into the locating hole 28 may be deformed by melting so as to be riveted thereto.

A continuous groove 38 is formed on the upper surface of the base portion 32, surrounding the upper portion 34 and the locating pins 36. A sealing member (not shown) is partially received in the groove 38 and is compressed between the base portion 32 and the lower surface of the central body 4 to seal the interface between the upper portion 34 and the central body 4 around the cutout 6 and the locating holes 28.

Outer terminals 40 of the parking electric circuit portion are exposed on the upper surface of the upper portion 34.

As shown in Figure 2, the parking electric circuit portion carried by the main body 30 comprises three spring contacts 50, i.e., an anode contact, a cathode contact and a ground contact, which contact the conductive contact plate on the output gear for detecting the operation state of the output gear, by means of which, the parking state of the wiper system is determined. Information about the parking state can be used for the controlling of the parking action of the wiper system.

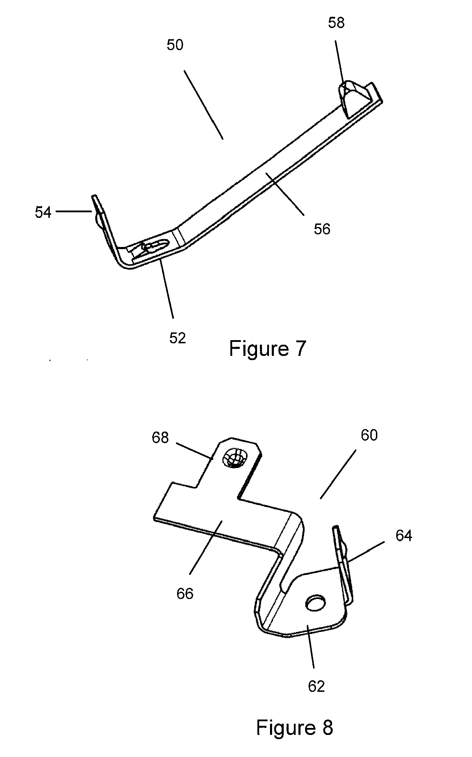

As shown in Figure 7, each spring contact 50 comprises a fixing portion 52 which is to be fixed to the bottom surface of the base plate 32, an back contacting portion 54 which extends vertically from the back side of the fixing portion 52 and is electrically connected with the anode or cathode of a power supply or a ground, a flexible arm portion 56 which extends obliquely from the front side of the fixing portion 52, and a contact bump 58 formed on the tip end of the arm portion 56 for contacting with the conductive contact plate.

As also shown in Figure 2, the parking electric circuit portion further comprises a ground plate 60 and two capacitors (condensers) 70. As shown in Figure 8, the ground plate 60 comprises a first fixing portion 62 which is to be fixed to the bottom surface of the base plate 32, a first contacting portion 64 extending from one side of the first fixing portion 62, for electrically connecting with the back contacting portion 54 of the ground spring contact 50, a second contacting portion 66 extending from another side of the first fixing portion 62, for electrically connecting with an leg of each capacitor 70, and a second fixing portion 68 which is to be fixed to the gear cover 1, in particular to the bottom wall 12 of the first slot 8. In this way, the gear cover 1 acts as a ground part of the parking electric circuit portion.

The capacitors 70 can be protected by a shrinkable sleeve 72.

The electric connector 2 can be fixed to the gear cover 1 by the locating pins 36 with locking features, and/or by separate fasteners.

The gear cover 1 is formed by stamping a sheet metal. Specifically, in a manufacturing process of the gear cover 1, a flat sheet metal is punched for forming the cutout 6, the locating holes 28, the locking tab 22 with cut-through holes 24, the locating tabs 26 (if any), and the like. Now the locking tab 22 and the locating tabs 26 are still substantially coplanar with the central body 4.

Further, by drawing and bending, the first and second slots 8 and 16, the locking tab 22 and the locating tabs 26 are formed.

The gear cover 1 formed in this way has higher rigidity and strength than the plastic gear cover used in the prior art. Meanwhile, the sealingability of the internal space defined by the gear cover and the gear housing is increased.

In addition, the gear cover 1 itself may act as a ground part of the parking system.

The disclosure also relates to an electric driver comprising an electric motor, a gear mechanism for outputting the motion of the electric motor, and a gear cover assembly described above which covers the gear mechanism, the electric connector forming a part of the parking electric circuit of the electric motor.

The electric driver and its gear cover assembly of the disclosure provide an advantageous option to the art.

While certain embodiments have been described, these embodiments are presented by way of example only, and are not intended to limit the scope of the disclosure. The scope and spirit of the disclosure are intended to cover all the modifications, substitutions and changes that can be made by those skilled in the art.

## Claims

1. A gear cover assembly for covering a gear mechanism of an electric driver, comprising:
a metal gear cover which is formed with a cutout therethrough; and
an electric connector comprising an insulative main body and a conductive terminal carried by the insulative main body, the insulative main body being fixed to the gear cover, and the electric connector covering or extending through the cutout.

2. The gear cover assembly of claim 1, wherein the gear cover is formed by pressing and comprises a flat central body and locking tabs which cooperate with corresponding locking structures on a gear housing to lock the gear cover to the gear housing.

3. The gear cover assembly of claim 2, wherein the gear cover further comprises an outer slot surrounding the central body, the locking tabs extending from an outer vertical wall, which delimits the outer slot, towards the gear housing.

4. The gear cover assembly of claim 3, wherein the gear cover further comprises locating tabs extending from the outer vertical wall for locating the gear cover with respect to the gear housing, and each locking tab comprises a cut-through hole into which a corresponding locking structure in the form of a locking protrusion on the gear housing is to be engaged.

5. The gear cover assembly of claim 3, wherein the gear cover further comprises an inner slot between the central body and the outer slot, the inner slot facing away from the gear housing.

6. The gear cover assembly of claim 2, wherein the central body is formed with locating holes around the periphery of the cutout, and the insulative main body of the electric connector is formed with locating pins which are inserted through the locating holes respectively for locating the electric connector to the gear cover.

7. The gear cover assembly of claim 6, wherein the locating pins are formed with fixing features for fixing the electric connector to the gear cover.

8. The gear cover assembly of claim 6, further comprising a sealing member sealing between the gear cover and the insulative main body of the electric connector around the cutout and the locating holes.

9. The gear cover assembly of any one of claims 1 to 8, wherein the electric connector comprises a ground plate electrically connected to the gear cover.

10. An electric driver, comprising:
an electric motor;
a gear mechanism for outputting the motion of the electric motor; and
a gear cover assembly of any one of claims 1 to 9 which covers the gear mechanism, the electric connector forming a part of a parking electric circuit for the electric motor.
